# FASCICULE DE BREVET EUROPEEN

(11) **EP 1 101 086 B1**
(45) Date de publication et mention de la délivrance du brevet: **19.02.2003**
(21) Numéro de dépôt: 99932597.0
(22) Date de dépôt: 30.07.1999
(51) Int. Cl.: G01K 17/20

(54) **DISPOSITIF DE MESURE DES ECHANGES DE QUANTITES DE CHALEUR EN REGIME VARIABLE, NON STATIONNAIRE OU TRANSITOIRE**
MESSVORRICHTUNG DES WÄRMEAUSTAUSCHS IN WECHSELNDEM, NICHT STATIONÄREN ODER ÜBERGANGS-BETRIEB
DEVICE FOR MEASURING EXCHANGES OF HEAT AMOUNTS IN NON-STATIONARY OR TRANSITORY VARIABLE OPERATING CONDITIONS

(30) Priorité: 31.07.1998 CH 160598
(43) Date de publication de la demande: 23.05.2001
(73) Titulaire: Thermoflux S.A., 1400 Yverdon-les-Bains (CH)
(72) Inventeur: PADOY, Jean-Claude, CH-1441 Valeyres-sous-Montagny (CH)
(74) Mandataire: Nithardt, Roland
(86) Numéro de dépôt international: CH9900358
(87) Numéro de publication internationale: WO00008431

(56) Documents cités:
- WO-A-95/22746
- US-A- 5 048 973
- US-A- 5 697 706
- DATABASE WPI Section Ch, Week 8738 Derwent Publications Ltd., London, GB; Class J04, AN 1987-270105 XP002122128 -& SU 1 289 544 A (IOFFE PHYS TECH INST), 15 février 1987 (1987-02-15)
- KAISER E: "DYNAMIC MEASURING ERROR CORRECTION OF ENCAPSULATED AUXILIARY WALL HEAT FLUX SENSORS MADE OF FILM RESISTANCE THERMOMETERS" MEASUREMENT,GB,INSTITUTE OF MEASUREMENT AND CONTROL. LONDON, vol. 8, no. 1, page 12-16 XP000136374 ISSN: 0263-2241

## Description

### Domaine technique

La présente invention concerne un dispositif de mesure des échanges de quantités de chaleur en régime variable, non stationnaire ou transitoire au sein d'un milieu solide, liquide ou gazeux, statique ou circulant à pression ou à température élevées.

### Technique antérieure

Dans l'industrie, pour des raisons de performances et de compétitivité, de nombreuses applications nécessitent un contrôle très précis de la température avant que le niveau thermique n'affecte ou soit préjudiciable aux matériaux, notamment dans les applications à régimes variables et dans les milieux à forte inertie qui représentent la majorité des cas applicatifs.

On sait que tout échange de quantités de chaleur conditionne l'évolution thermique du milieu dans lequel il a pris naissance. On constate que toute perturbation thermique provoquée par un échange de quantités de chaleur instantanées au sein d'un milieu à forte inertie n'influence que très faiblement la température de ce milieu. En temps réel, cette variation dynamique est quasiment indétectable avec les dispositifs de mesure de température conventionnels connus dans lesquels on procède à une intégration des quantités de chaleur.

L'évolution des performances des processus industriels conduit à disposer de moyens techniquement plus évolués, économiquement acceptables et capables de transmettre, en temps réel, une information représentative des échanges thermiques initiés dans un milieu solide, liquide ou gazeux, statique ou circulant. Ces moyens doivent permettre le contrôle des modifications énergétiques au sein du milieu de manière à anticiper toute variation de la température et/ou de détecter tout changement d'état physique de ce milieu.

De nombreux processus industriels ont des environnements sévères dans lesquels les températures et les pressions sont élevées. Pour mesurer des échanges de quantités de chaleur dans ces environnements à l'aide de capteurs, il est donc impossible d'utiliser, du fait de la pression, une surface de contact suffisamment significative et ceci au détriment de la sensibilité du capteur utilisé.

### Exposé de l'invention

La présente invention propose de remédier à ces inconvénients en offrant un dispositif comportant un élément sensible permettant la mesure du flux thermique échangé entre deux régions d'un milieu, en contact physique, dont la température, d'au moins l'une d'entre elles, varie en fonction du temps

Ce but est atteint par le dispositif tel que défini en préambule et caractérisé en ce qu'il comporte au moins un élément sensible thermofluxmétrique conductif disposé entre deux masses métalliques semi-cylindriques à haute conductivité thermique, et solidaire de ces deux masses métalliques couplées thermiquement audit élément sensible thermofluxmétrique, l'ensemble formé constituant une structure de mesure pourvue d'une base circulaire normale à l'axe longitudinal de l'élément sensible.

Ce dispositif, bien que présentant une faible surface de contact avec le milieu à contrôler, possède une surface suffisamment importante avec l'élément sensible thermofluxmétrique pour que la sensibilité du capteur ne soit pas affectée.

D'autre part, les perturbations thermiques environnementales parasites provoquées notamment par la conduction de la structure de mesure avec le support dans lequel celui-ci est fixé sont fortement réduites par construction à l'aide d'écrans radiatifs et conductifs.

Selon un premier mode réalisation, la base circulaire de la structure de mesure est plane et la structure de mesure est logée à l'intérieur d'un corps cylindrique creux.

De façon avantageuse, le corps cylindrique est fermé par un fond à l'une de ses extrémités, et la structure de mesure est maintenue dans ce corps par des moyens de compression mécanique agencés pour assurer le plaquage thermique de la base circulaire plane de la structure de mesure sur la surface intérieure du fond du corps.

De préférence, la surface extérieure de la structure de mesure et les surfaces extérieure et intérieure correspondantes du corps du dispositif sont revêtues d'une couche à haute émissivité.

De façon avantageuse, le corps est logé dans un manchon cylindrique solidaire d'un support lié à un élément du milieu à contrôler, la surface cylindrique plane extérieure de l'extrémité du corps qui est couplée thermiquement à la structure de mesure étant en contact direct avec ledit milieu à contrôler.

Dans tous les modes de réalisation, des volumes vides sont ménagés coaxialement entre la surface intérieure du corps et la surface extérieure de la structure de mesure afin de former une barrière thermique radiale destinée à limiter les effets parasites du flux conductif provenant du support du corps.

Dans une variante de réalisation, l'extrémité inférieure du corps cylindrique creux peut être ouverte et, dans ce cas, la base circulaire de la structure de mesure est en contact direct avec le milieu à contrôler.

Afin de s'adapter aux formes du milieu à contrôler, la base circulaire de la structure de mesure peut comporter une forme variable agencée pour coopérer avec une des formes dudit milieu.

La base circulaire de la structure de mesure peut également être constituée de plusieurs métaux.

### Description sommaire des dessins

La présente invention sera mieux comprise en référence à la description de divers modes de réalisation et aux dessins annexés, dans lesquels:
la figure 1 représente une vue latérale du dispositif selon l'invention,
la figure 2 représente une vue en coupe longitudinale du dispositif de la figure 1, et
les figures 3A à 3E représentent différentes formes de réalisation de l'extrémité de contact de la structure de mesure d'une variante du dispositif selon l'invention.

### Meilleures manières de réaliser l'invention

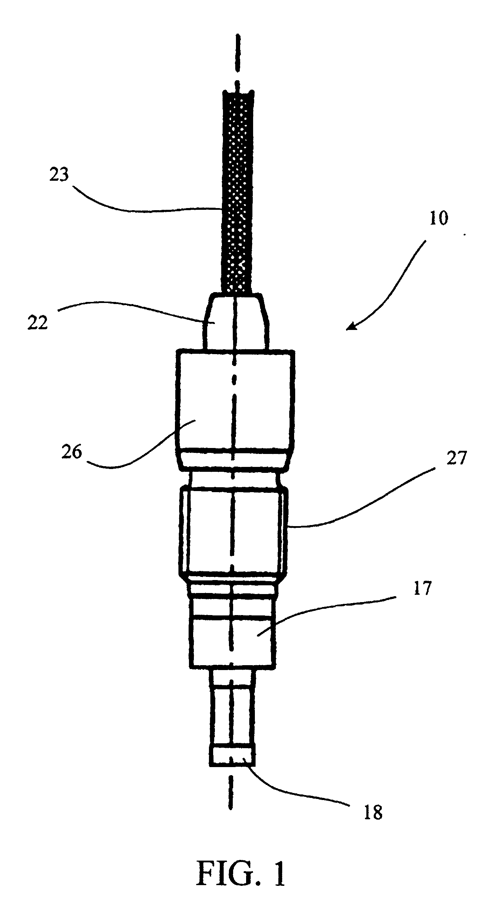

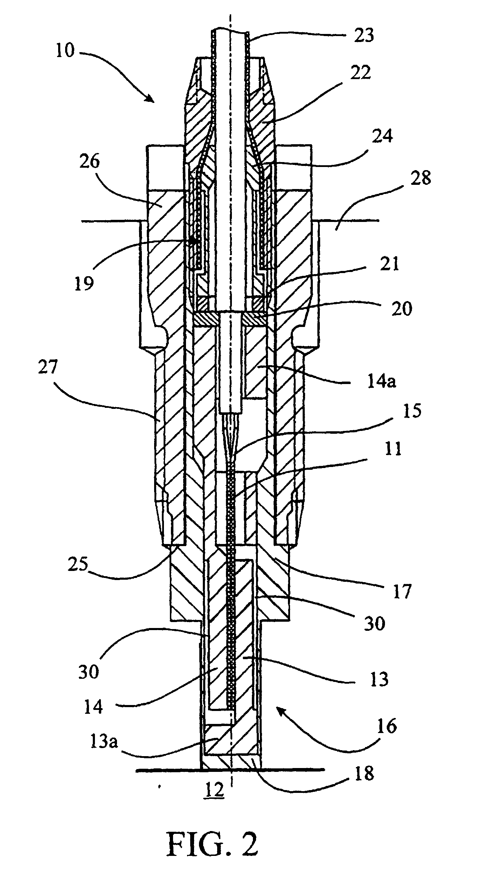

En référence aux figures 1 et 2, le dispositif selon l'invention 10 comporte un élément sensible conductif 11 du type thermofluxmétrique, disposé longitudinalement au coeur du dispositif 10. Cet élément sensible 11 est revêtu d'un matériau fortement conducteur de la chaleur et est maintenu entre deux masses métalliques, respectivement 13 et 14, réalisées dans un métal présentant une haute conductivité thermique. Ces deux masses ont sensiblement une forme de L semi-cylindrique composé d'une base, respectivement 13a, 14a et d'une partie verticale 13b, 14b, normale à cette base. Ces deux masses 13 et 14 sont couplées thermiquement et disposées tête bêche afin que l'élément sensible 11 soit emprisonné entre les deux parties verticales13b et 14b. L'extrémité supérieure de l'élément sensible 11 est solidaire d'un câble 15 logé dans une gaine traversant la base 14a par un alésage ménagé dans cette base. L'élément sensible 11 et les masses 13 et 14 forment une structure de mesure 16 dont la base circulaire 13a qui, dans la forme de réalisation représentée est plane, est normale à l'axe longitudinal de l'élément sensible 11.

La structure de mesure 16 est logée à l'intérieur d'un corps cylindrique creux 17, fermé à une de ses extrémités par un fond 18, et définissant le "doigt de gant" du dispositif 10. La structure 16 est insérée dans le corps cylindrique 17 de façon à ce que la base 13a soit en contact avec la face intérieure du fond 18 qui forme ainsi la surface de contact du dispositif 10 avec un milieu à contrôler 12. La structure est maintenue plaquée contre ce fond 18 par l'intermédiaire de moyens de compression mécanique 19.

Les moyens de compression 19 comprennent un joint d'étanchéité 20, disposé entre la base 14a de la masse 14 et une rondelle 21 destinée à empêcher la rotation de la structure de mesure 16 dans le corps 17, et un embout de serrage 22 cylindrique. Cet embout de serrage 22 est pourvu d'un alésage central cylindrique permettant le passage d'une tresse de masse 23 entourant la gaine du câble 15, et est fileté sur sa surface extérieure pour coopérer avec un filetage intérieur ménagé dans la partie supérieure du corps 17. La tresse de masse 23 est bloquée en position entre l'embout 22 et la gaine par une pince de blocage 24 de forme tronconique.

La surface cylindrique extérieure de la structure de mesure 16 et les surfaces extérieure et intérieure correspondantes du corps 17 et coaxiales à la surface de l'élément sensible thermofluxmétrique 11 sont revêtues d'une couche à haute émissivité afin d'améliorer les performances du dispositif 10.

Le corps 17 est pourvu sur sa surface extérieure d'un épaulement 25 destiné à servir de surface d'appui à un manchon cylindrique 26 agencé pour être, d'une part, emboîté sur le corps 17 jusqu'à l'épaulement 25 et, d'autre part, solidaire par sa surface extérieure d'un support 28 lié à un élément du milieu à contrôler 12. A cet effet, ce manchon est pourvu, sur une partie de sa surface extérieure, d'un filetage 27 qui coopère avec un filetage approprié du support 28.

Les parties verticales 13b et 14b des masses 13 et 14 sont pourvues de dégagements dont la longueur est sensiblement égale à la plus grande partie de l'élément sensible 11 afin de définir avec la paroi intérieure du corps 17 des volumes vides coaxiaux 30. Ces volumes 30 sont ménagés pour former une barrière thermique radiale destinée à limiter les perturbations thermiques du support 28 vers le corps 17 renfermant la structure de mesure 16.

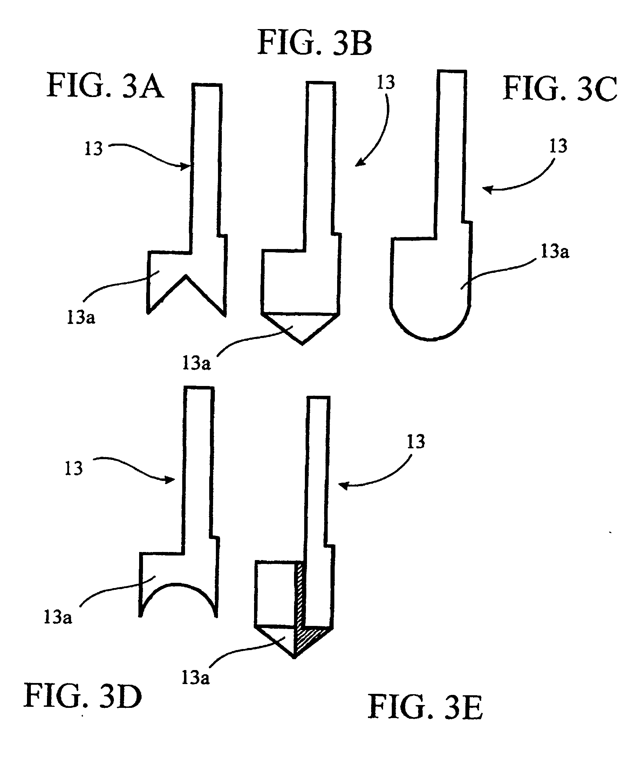

Dans une variante de réalisation non représentée du dispositif 10, le corps 17 est ouvert à son extrémité 18 et la surface de contact de la structure de mesure 16 avec le milieu à contrôler 12 est formée directement par la base 13a de la masse 13. Afin de pouvoir être en contact étroit avec ce milieu à contrôler, cette base peut se présenter sous différentes formes telles que celles illustrées par les figures 3A à 3E. La base circulaire 13a peut ainsi avoir sa surface inférieure formant un angle aigu (fig. 3A) ou obtus (fig. 3B), ou convexe (fig. 3C), ou concave (fig. 3D).

Cette base peut également être constituée de deux métaux, l'un fortement conducteur de la chaleur et l'autre fortement réfractaire, de manière à canaliser le flux thermique et à ausculter un espace thermique déterminé. Elle peut en outre présenter une des formes déjà mentionnées, par exemple un angle obtus (fig. 3E).

### Applications industrielles

Le dispositif selon l'invention est applicable aux mesures de quantités de chaleur dans les échanges non stationnaires comportant une répétition de cycles périodiques, de cycles quelconques ou de cycles apériodiques et présentant des régimes transitoires dans lesquels les gradients de température sont souvent très élevés. Ces gradients de température peuvent induire, par exemple, des dilatations, des tensions internes d'origine thermique ou contraintes thermiques qui sont beaucoup plus importantes en régime transitoire qu'en régime permanent.

Le dispositif selon l'invention peùt donc être avantageusement utilisé lors de différents contrôles, par exemple
- le contrôle des polymères en différents endroits du système vis/fourreau des machines à injecter ou des extrudeuses utilisées en plasturgie,
- le contrôle de la matière dans les moules d'injection plastiques,
- le contrôle des polymères alimentaires dans le système vis/fourreau d'une machine d'extrusion,
- le contrôle du lubrifiant, notamment dans les roulements à billes ou à rouleaux, ou de paliers fortement sollicités et fonctionnant à haute vitesse, sous forte charge, ou dans des environnements sévères à très haute ou très basse température ou sous vide,
- le contrôle des paliers hydrodynamiques utilisés notamment dans les pompes à engrenages ou dans les pompes de chimie à entraînement magnétique.

## Revendications

1. Dispositif pour la mesure des échanges de quantités de chaleur en régime variable, non stationnaire ou transitoire au sein d'un milieu solide, liquide ou gazeux, statique ou circulant à pression et à température élevées, **caractérisé en ce qu'**il comporte au moins un élément sensible thermofluxmétrique conductif (11) disposé entre deux masses métalliques semi-cylindriques (13, 14) à haute conductivité thermique, et solidaire de ces deux masses métalliques couplées thermiquement audit élément sensible thermofluxmétrique, l'ensemble formé constituant une structure de mesure (16) pourvue d'une base circulaire (13a) normale à l'axe longitudinal de l'élément sensible (11).

2. Dispositif selon la revendication 1, **caractérisé en ce que** la base circulaire (13a) de la structure de mesure (16) est plane.

3. Dispositif selon la revendication 1, **caractérisé en ce que** la structure de mesure (16) est logée à l'intérieur d'un corps cylindrique creux (17).

4. Dispositif selon les revendications 2 et 3, **caractérisé en ce que** le corps cylindrique (17) est fermé par un fond (18) à l'une de ses extrémités, et **en ce que** la structure de mesure (16) est maintenue dans ce corps par des moyens de compression mécanique (19) agencés pour assurer le plaquage thermique de la base circulaire plane (13a) de la structure de mesure sur la surface intérieure du fond (18) du corps (17).

5. Dispositif selon la revendication 4, **caractérisé en ce que** la surface extérieure de la structure de mesure (16) et les surfaces extérieure et intérieure correspondantes du corps (17) du dispositif (10) sont revêtues d'une couche à haute émissivité.

6. Dispositif selon la revendication 4, **caractérisé en ce que** le corps (17) est logé dans un manchon cylindrique (26) solidaire d'un support (28) lié à un élément du milieu à contrôler (12), la surface cylindrique plane extérieure du fond (18) du corps (17) qui est couplée thermiquement à la structure de mesure (16) étant en contact direct avec ledit milieu à contrôler.

7. Dispositif selon la revendication 6, **caractérisé en ce que** des volumes vides (30) sont ménagés coaxialement entre la surface intérieure du corps (17) et la surface extérieure de la structure de mesure (16) afin de former une barrière thermique radiale destinée à limiter les effets parasites du flux conductif provenant du support (28) du corps (17).

8. Dispositif selon la revendication 3, **caractérisé en ce que** l'extrémité inférieure (18) du corps cylindrique creux (17) est ouverte, et **en ce que** la base circulaire (13a) de la structure de mesure (16) est en contact direct avec le milieu à contrôler (12).

9. Dispositif selon la revendication 8, **caractérisé en ce que** la base circulaire (13a) de la structure de mesure (16) comporte une forme variable agencée pour coopérer avec une des formes du milieu à contrôler

10. Dispositif selon la revendication 8, **caractérisé en ce que** la base circulaire (13a) de la structure de mesure (16) est constituée de plusieurs métaux.

## Claims

1. A device for measuring exchanges of amounts of heat in a variable, non-stationary or transient state inside a solid, liquid or gaseous medium, which is static or flowing at high pressure and high temperature,
**characterised in that** it comprises at least one conductive sensing element (11) for measuring the heat flow disposed between two semi-cylindrical metal masses (13, 14) having high thermal conductivity, and integral with these two metal masses which are thermally coupled to the said sensing element for measuring heat flow, the assembly formed making up a measurement structure (16) provided with a circular base (13a) normal to the longitudinal axis of the sensing element (11).

2. A device according to Claim 1,
**characterised in that** the circular base (13a) of the measurement structure (16) is plane.

3. A device according to Claim 1,
**characterised in that** the measurement structure (16) is housed inside a hollow cylindrical body (17).

4. A device according to Claims 2 and 3,
**characterised in that** the cylindrical body (17) is closed by a bottom (18) at one of its ends,
**and in that** the measurement structure (16) is kept in this body by mechanical compression means (19) designed to ensure the thermal flattening of the plane circular base (13a) of the measurement structure on the inner surface of the base (18) of the body (17).

5. A device according to Claim 4,
**characterised in that** the outer surface of the measurement structure (16) and the corresponding outer and inner surfaces of the body (17) of the device (10) are coated with a high-emissivity layer.

6. A device according to Claim 4,
**characterised in that** the body (17) is housed in a cylindrical sleeve (26) integral with a support (28) connected to an element of the medium to be controlled (12), the outer plane cylindrical surface of the bottom (18) of the body (17) which is thermally coupled to the measurement structure (16) being in direct contact with the said medium to be controlled.

7. A device according to Claim 6,
**characterised in that** empty volumes (30) are provided coaxially between the inner surface of the body (17) and the outer surface of the measurement structure (16) so as to form a radial thermal barrier intended to limit the parasitic effects of the conductive flow coming from the support (28) of the body (17).

8. A device according to Claim 3,
**characterised in that** the lower end (18) of the hollow cylindrical body (17) is open,
**and in that** the circular base (13a) of the measurement structure (16) is in direct contact with the medium to be controlled (12).

9. A device according to Claim 8,
**characterised in that** the circular base (13a) of the measurement structure (16) has a variable shape designed to cooperate with one of the shapes of the medium to be controlled.

10. A device according to Claim 8,
**characterised in that** the circular base (13a) of the measurement structure (16) is made from several metals.

## Patentansprüche

1. Vorrichtung zum Messen variabler, nicht stationärer oder momentaner Wärmeaustauschmengen in einer festen, flüssigen oder gasförmigen Umgebung, die statisch ist oder druckbeaufschlagt mit hohen Temperaturen zirkuliert,
**dadurch gekennzeichnet, dass**
sie mindestens ein empfindliches, wärmeflussmessendes, leitendes Element (11) aufweist, das zwischen zwei halbzylindrischen Metallmassen (13,14) mit hoher Wärmeleitfähigkeit angeordnet ist und mit den zwei thermisch mit dem empfindlichen wärmeflussmessenden, leitenden Element verbundenen Metallmassen fest verbunden ist, wobei die gebildete Einheit eine Messstruktur (16) bildet, die mit einer kreisförmigen Basis (13a) versehen ist, die senkrecht zu der Längsachse des empfindlichen Elementes (11) verläuft.

2. Vorrichtung nach Anspruch 1,
**dadurch gekennzeichnet, dass**
die kreisförmige Basis (13a) der Messstruktur (16) eben ist.

3. Vorrichtung nach Anspruch 1,
**dadurch gekennzeichnet, dass**
die Messstruktur (16) im Inneren eines zylindrischen Hohlkörpers (17) untergebracht ist.

4. Vorrichtung nach den Ansprüchen 2 und 3,
**dadurch gekennzeichnet, dass**
der zylindrische Körper (17) an einem seiner äußersten Enden mittels eines Bodens (18) verschlossen ist, und dass die Messstruktur (16) in dem Körper von Mitteln zum mechanischen Zusammendrücken (19) gehalten wird, die zur Sicherstellung der thermischen Plattierung der ebenen kreisförmigen Basis (13a) der Messstruktur auf der Innenfläche des Bodens (18) des Körpers (17) vorgesehen sind.

5. Vorrichtung nach Anspruch 4,
**dadurch gekennzeichnet, dass**
die Außenfläche der Messstruktur (16) und die entsprechenden Außen- und Innenflächen des Körpers (17) der Vorrichtung (10) mit einer Schicht mit hohem Emissionsgrad beschichtet sind.

6. Vorrichtung nach Anspruch 4,
**dadurch gekennzeichnet, dass**
der Körper (17) in einer zylindrischen Buchse (26) untergebracht ist, die mit einer mit einem Element der zu kontrollierenden Umgebung (12) verbundenen Halterung (28) fest verbunden ist, wobei die ebene zylindrische Außenfläche des thermisch mit der Messstruktur (16) verbundenen Bodens (18) des Körpers (17) in direktem Kontakt mit der zu kontrollierenden Umgebung steht.

7. Vorrichtung nach Anspruch 6,
**dadurch gekennzeichnet, dass**
die Leervolumina (30) koaxial zwischen der Innenfläche des Körpers (17) und der Außenfläche der Messstruktur (16) angeordnet sind, um eine radiale thermische Barriere zu bilden, die zur Begrenzung von Störwirkungen bestimmt ist, die von der Halterung (28) des Körpers (17) ausgehen.

8. Vorrichtung nach Anspruch 3,
**dadurch gekennzeichnet, dass**
das untere äußerste Ende (18) des Hohlkörpers (17) offen ist und dass die kreisförmige Basis (13a) der Messstruktur (16) in direktem Kontakt mit der zu kontrollierenden Umgebung (12) steht.

9. Vorrichtung nach Anspruch 8,
**dadurch gekennzeichnet, dass**
die kreisförmige Basis (13a) der Messstruktur (16) eine zum Zusammenwirken mit einer der Formen der zu kontrollierenden Umgebung vorgesehene variable Form aufweist.

10. Vorrichtung nach Anspruch 8,
**dadurch gekennzeichnet, dass**
die kreisförmige Basis (13a) der Messstruktur (16) aus mehreren Metallen besteht.
